# EUROPEAN PATENT SPECIFICATION

(11) **EP 1 968 811 B1**
(45) Date of publication and mention of the grant of the patent: **01.05.2013**
(21) Application number: 05856097.0
(22) Date of filing: 20.12.2005
(51) Int. Cl.: B60H 1/00, F25D 19/02, B60H 1/32

(54) **INTEGRATED TRANSPORT REFRIGERATION UNIT WITH LIMITED HEAT TRANSFER**
INTEGRIERTE TRANSPORTKÜHLEINHEIT MIT BESCHRÄNKTER WÄRMEÜBERTRAGUNG
UNITE DE REFRIGERATION DE TRANSPORT INTEGREE AVEC TRANSFERT DE CHALEUR LIMITE

(43) Date of publication of application: 17.09.2008
(73) Proprietor: Carrier Corporation, Farmington, CT 06034-4015 (US)
(72) Inventor: CHAKIACHVILI, Bruno, F-01360 Beligneux (FR); FERREIRA, Joaquim, F-76410 Freneuse (FR); SAUDOYEZ, Claude, F-76750 Vieux Manoir (FR)
(74) Representative: Leckey, David Herbert
(86) International application number: PCT/US2005/047632
(87) International publication number: WO 2007/073391

(56) References cited:
- EP-A2- 0 070 636
- US-A- 3 680 468
- US-A- 4 043 143
- US-A- 4 048 911
- US-A- 4 196 657
- US-A- 4 622 831
- US-A- 4 641 502
- US-A- 4 690 040
- US-A- 5 184 474
- US-A- 5 791 156
- US-B1- 6 282 912
- US-B1- 6 339 934
- US-B1- 6 536 222
- US-B2- 6 983 619

## Description

### BACKGROUND TO THE INVENTION

The invention relates to a transport refrigeration unit including a condenser located within a vehicle. More particularly, the invention relates to an apparatus and a method for quickly mounting a refrigeration unit to a vehicle and limiting the heat transfer between the refrigeration unit components and the vehicle interior.

Conventional transport refrigeration units provide cooling inside a vehicle compartment. The conventional transport refrigeration units are typically located on a vehicle roof within a refrigeration unit housing. The transport refrigeration unit cools air that is pumped into the vehicle compartment to provide cooling.

A condenser produces heat, and vents within the refrigeration unit housing allow for external airflow to reach the refrigeration unit components to manage the heat created by the condenser during operation. The vehicle roof acts as an insulator to protect the vehicle interior from the heat produced by the condenser.

Locating the refrigeration unit housing on the vehicle roof is unsightly. It would be desirable to locate the refrigeration unit within the vehicle compartment to hide the refrigeration unit components from external view. However, heat from the condenser and other components is emptied into the vehicle compartment, counteracting with the cooled air pumped into the vehicle compartment from the refrigeration unit. Also, moisture from the external environment and water that collects on the evaporator must be disposed of so that is will not leak from the refrigeration unit into the vehicle. Additionally, the refrigeration unit housing must be removable for maintenance and repair.

An arrangement and a method for locating refrigeration unit components in a vehicle while providing a removable housing and sealing from the vehicle interior is needed.

US-B1-6536222 discloses an air conditioning unit mounted in a vehicle roof and having an external cabinet which is positioned externally of the roof and a mounting frame positioned within an opening in the roof. A floor panel is attached to a pan of the unit by fasteners.

### SUMMARY OF THE INVENTION

From a first aspect, the present invention provides a vehicle as set forth in claim 1. The internal housing of the refrigeration unit may have an inner wall spaced from an outer wall with air located between the walls to insulate the components of the refrigeration unit from the interior of the vehicle.

The external housing, a fan, and a fan cover may be assembled prior to assembly on the vehicle roof. Likewise, the internal housing, a condenser, a compressor, and an evaporator may be assembled together into a refrigeration unit chassis prior to assembly with the vehicle roof. The fasteners have a locking portion which is inserted through a hole in the internal housing.

The external housing and the fan cover reduce the amount of water and other external contaminants that enter the refrigeration unit. A gasket may be located between the refrigeration unit and the vehicle roof for further sealing. Water drains may be located at the bottom of the internal housing along the inner wall to collect any water within the refrigeration unit. The water drains lead to a water outlet that allows moisture from within the refrigeration unit to drain.

These and other features of the present invention can be best understood from the following specification and drawings, the following of which is a brief description.

### BRIEF DESCRIPTION OF THE DRAWINGS

Figure 1 is a schematic view of a vapor compression system of the present invention;
Figure 2 shows a perspective view of a refrigeration unit of the present invention;
Figure 3 illustrates a schematic side view from within the refrigeration unit; and
Figure 4 is an exploded view of the components of the refrigeration unit.
Figure 5a is a cross section of one embodiment of a fastener retaining an internal housing to a chassis of the present invention.
Figure 5b is a bottom view of one embodiment of the internal housing of the refrigeration unit.

### DETAILED DESCRIPTION OF THE PREFERRED EMBODIMENT

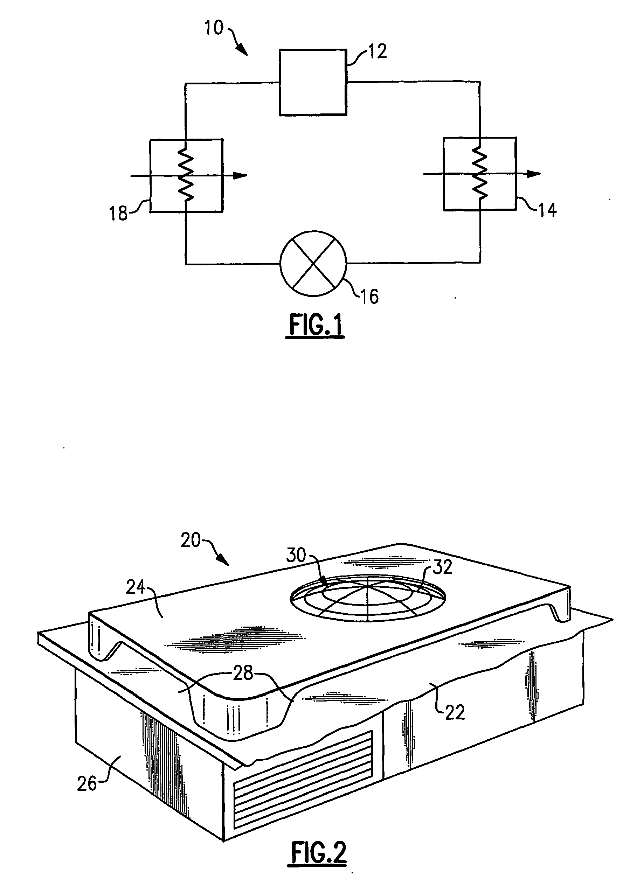

Figure 1 illustrates a vapor compression system 10, such as a refrigeration system, including a compressor 12 that compresses a fluid, such as refrigerant. From the compressor 12, the refrigerant is delivered downstream to a heat exchanger, such as a condenser 14. In the condenser 14, the refrigerant rejects heat to an external fluid medium. In the embodiment shown, the external fluid medium is air. From the condenser 14, the refrigerant travels to an expansion device 16 and is expanded to a low pressure. The refrigerant accepts heat from another fluid medium, such as air, in an evaporator 18 and then flows to the compressor 12, completing the cycle.

Figure 2 shows a perspective view of a refrigeration unit 20 of the present invention including the vapor compression system 10. A vehicle roof 22 supports the refrigeration unit 20. The refrigeration unit 20 includes an external housing 24 and an internal housing 26. The external housing 24 is located primarily outside of the vehicle roof 22. The internal housing 26 is located primarily inside of a vehicle compartment 21 and under the vehicle roof 22, as shown. External air enters the external housing 24 through a first opening 28 located between the vehicle roof 22 and the external housing 24. As shown, the refrigeration unit 20 can include multiple first openings 28 to increase the airflow into the refrigeration unit 20. The air passes over the components of the refrigeration unit 20, such as the condenser 14 and the compressor 12 and is heated. The now heated air exits through a second opening 30 in the external housing 24. A cover 32 may be located at the second opening 30 to reduce the amount of water and other external contaminants that may enter the refrigeration unit 20 through the second opening 30. Additionally, the external housing 24 also assists in preventing water and other external contaminants from entering the refrigeration unit 20.

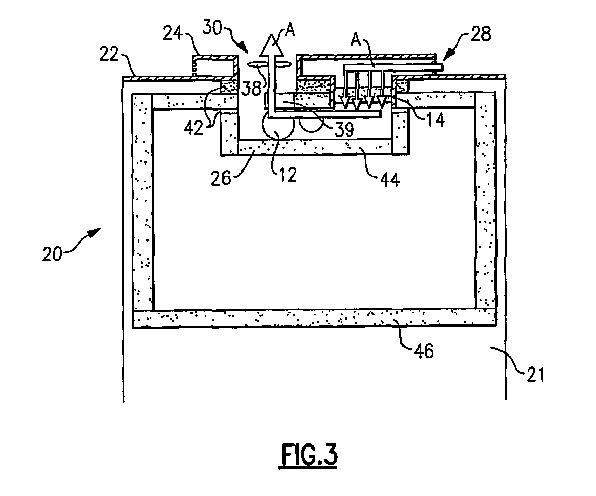

Figure 3 illustrates a schematic side view of the refrigeration unit 20. External air, illustrated by arrows A, enters the refrigeration unit 20 through the first opening 28. The external air flows past the components of the refrigeration unit 20. Specifically, the air accepts heat from the refrigerant in the condenser 14 and passes over the compressor 12 prior to exiting the refrigeration unit 20 through the second opening 30. The refrigerant cooled by the condenser 14 is expanded in the expansion device 16 and flows into an evaporator 18, where the refrigerant cools air to be sent into the vehicle compartment 21. The outside air accepts heat from both the condenser 14 and the compressor 12, removing heat from the compressor 12 as a result of operation. The heated air exits the refrigeration unit 20 through the second opening 30 and flows outside the vehicle.

A fan 38 located proximate to the second opening 30 controls the airflow through the refrigeration unit 20. A sensor 39 located within the refrigeration unit 20 measures the pressure and activates the fan 38 accordingly. As the sensor 39 senses a rise in the pressure of the air exiting the refrigeration unit 20 above a threshold, the fan 38 is activated. Likewise, when the sensor 39 senses a drop in the pressure of the air exiting the refrigeration unit 20 below a threshold, the fan 38 is deactivated. The cover 32 is attached to the external housing 24 proximate to the second opening 30 to cover the fan 38.

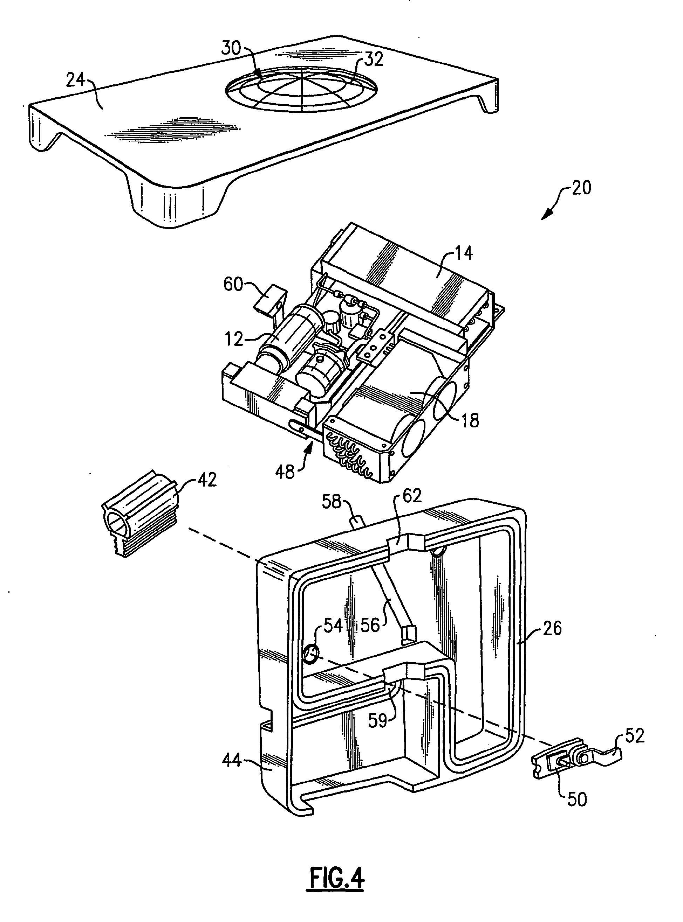

The condenser 14 is located proximate to the first opening 28 and in the airflow path of the refrigeration unit 20. Both the condenser 14 and the compressor 12 are primarily located within the internal housing 26 under the vehicle roof 22. Additionally, the evaporator 18 may also be located within the internal housing 26, as shown in Figure 4. However, the evaporator 18 need not be located within the airflow path through the refrigeration unit 20.

The internal housing 26 may have a inner wall 44 spaced from an outer wall 46. The inner wall 44, the outer wall 46 and the air located there between insulate the components of the refrigeration unit 20 from the interior of the vehicle. Additionally, a gasket 42 may be located between the refrigeration unit 20 and the vehicle roof 22 for further sealing between the refrigeration unit 20 and the vehicle compartment 21. The gasket 42 may be integrated into grooves in the internal housing 26.

Referring to Figure 4, the external housing 24, the fan 38, and the cover 32 may be assembled prior to assembly on the vehicle roof 22. The fan 38 is assembled within the second opening 30 in the external housing 24. The cover 32 attaches to the external housing 24 to shield the second opening 30 and fan 38. Likewise, the condenser 14, the compressor 12, and the evaporator 18 may be assembled together into a refrigeration unit chassis 48 prior to assembly with the vehicle roof 22. Fasteners 50 are used to assemble the internal housing 26 to the chassis 48 for easy removal. By pre-assembling the components and providing fasteners 50, handling and removal is facilitated if any maintenance is required.

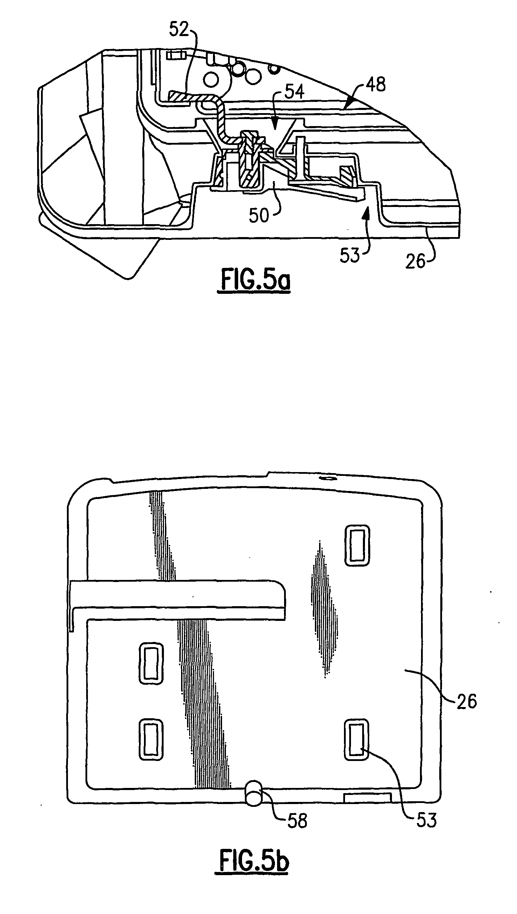

Figure 5a and 5b illustrate the fasteners 50, which are quarter-turn locking fasteners, and have a locking portion 52 that is inserted through a hole 54 in the internal housing 26. The locking portion 52 engages the chassis 48 to retain the internal housing 26 to the chassis 48. The internal housing 26 has a recessed portion 53 to receive the fasteners 50 on the opposing side of the internal housing 26 that is seen by the vehicle compartment 21. The fasteners 50 provide their own sealing on the locking portion 52 to eliminate any leaking from the refrigeration unit 20 to the vehicle compartment 21 through the insert holes 54 for the locking portion 52. The locking portion 52 may be manufactured from a polyurethane material, or have a sealed disc manufactured from polyurethane material attached. In the embodiment shown, there are four fasteners 50. Additionally, the interior wall 44 of the internal housing 26 may be coated in polyurethane material to aid in sealing. Other types of fasteners or locking devices may also be used. One skilled in the art would know the number and type of fasteners 50 to utilize in a specific application of the invention.

Referring back to Figure 4, the cover 32 and the external housing 24 also assist in preventing water and other external contaminants from entering the refrigeration unit 20. However, some moisture may still enter the refrigeration unit 20. Also, moisture may collect on the components of the refrigeration unit 20 during operation. Water drains 56 are located at the bottom of the internal housing 26 within the inner wall 44. In the embodiment shown, the water drains 56 are trenches formed in the internal housing 26. Additionally, a drain receiver 59 may be located in the portion of the internal housing 26 that houses the evaporator 18. The water drains 56 and drain receiver 59 may be lined with Mylar foil to limit air bypassing out of the internal housing 26. The water drains 56 and drain receiver 59 lead to a water outlet 58. The water outlet 58 allows moisture from within the refrigeration unit 20 to drain out. The water outlet 58 preferably leads to piping, such as polyvinyl chloride (PVC) pipes, leading to the vehicle exterior. In one embodiment, the water outlet 58 is a 40-millimeter pipe.

Brackets 60 may be manufactured from or coated in a polyurethane material and fixed to the chassis 48. The brackets 60 may fit within inserts 62 in the internal housing 26 to allow any tubing and packaging to reach the refrigeration unit 20. Additionally, the brackets 60 assist in insulating the high-pressure side of internal housing 26 including the compressor 12 and the condenser 14 from the bottom pressure side of the internal housing 26 where the evaporator 18 is located. The brackets 60 also insulate the high-pressure side of the internal housing 26 from the vehicle compartment 21 when the unit is assembled.

The external housing 24, the fan 38, and the cover 32 are assembled together and mounted to the exterior side of the vehicle compartment 21. The compressor 12, the condenser 14, and the evaporator 18 are assembled into the chassis 48. The chassis 48 is then mounted to the interior side of the vehicle compartment 21 to align with the external housing 24 mounted on the exterior side. Drainage pipes are attached to the water outlet 58, and the gasket 42 is assembled onto the internal housing 26. The internal housing 26 is then attached to the chassis 48 using the fasteners 50.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A vehicle having a vehicle compartment and a vehicle roof (22) and a refrigeration unit said refrigeration unit comprising:
an external housing (24) located primarily outside said vehicle compartment;
an internal housing (26) located primarily inside of said vehicle compartment;
a chassis (48) mounted to an interior surface of said vehicle compartment; and
a plurality of fasteners (52) for removably attaching said chassis (48) to said internal housing (26);
**characterised in that** a compressor (12) and a condenser (14) are assembled to the chassis (48), **in that** a first opening (28) is located between said vehicle roof (22) and a lower edge of said external housing (24) and a second opening (30) is located in said external housing (24); and **in that** the unit is configured such that in use external air enters the external housing (24) through the first opening (28), passes over the compressor (12) and condenser (14) to be heated thereby and exits the external housing (24) through the second opening (30).

2. The vehicle of claim 1, further including an evaporator (18) mounted on said chassis (48).

3. The vehicle of claim 1 or 2, wherein said plurality of fasteners (52) are quarter-turn locking fasteners.

4. The vehicle of claim 1, 2 or 3, wherein said internal housing (26) includes an inner wall (44) spaced from an outer wall (46) to provide insulation for said refrigeration unit.

5. The vehicle of any preceding claim, further including a water drain (56) provided in said internal housing (26).

6. The vehicle of claims 5 and 6 wherein said water drain (56) is provided in said internal housing (26).

7. The vehicle of claim 6, wherein said water drain (56) is a trench formed in said inner wall (44) of said internal housing (26).

8. The vehicle of claim 5, 6 or 7, wherein said water drain (56) leads to the vehicle exterior.

9. The vehicle of any preceding claim, further including a gasket (42) located between said internal housing (26) and said vehicle compartment to provide sealing.

10. A method of assembling a refrigeration unit to a vehicle having a vehicle compartment and a vehicle roof (22) comprising:
mounting an external housing (24) of said unit (10) outside said vehicle compartment;
providing a first opening (28) located between said vehicle roof (22) and a lower edge of said external housing (24),
providing a second opening in said external housing (24),
assembling a condenser (14), a compressor (12), and an evaporator (18) to a chassis (48);
mounting the chassis (48) to an interior surface of the vehicle compartment; and
attaching an internal housing (26) of the unit (10) to the chassis (48) with a plurality of fasteners (52) inside the vehicle compartment;
the configuration being such that in use external air enters the external housing (24) through the first opening (28), passes over the compressor (12) and condenser (14) to be heated thereby and exits the external housing (24) through the second opening (30).

11. The method of claim 10, wherein said step of attaching the internal housing (26) includes inserting each of the plurality of fasteners (52) through one of a plurality of openings (54) in the internal housing (26).

12. The method of claim 11, wherein said step of attaching the internal housing (26) includes removably locking the plurality of fasteners (52) to the chassis (48).

13. The method of any of claims 10 to 12, further including a step of placing a gasket (42) between the vehicle compartment and the internal housing (26).

## Patentansprüche

1. Fahrzeug mit einem Fahrzeugraum und einem Fahrzeugdach (22) und einer Kühleinheit, wobei die Kühleinheit Folgendes umfasst:
ein äußeres Gehäuse (24), das vor allem außerhalb des Fahrzeugraums angeordnet ist;
ein inneres Gehäuse (26), das vor allem innerhalb des Fahrzeugraums angeordnet ist;
ein Fahrgestell (48), das an einer Innenfläche des Fahrzeugraums angebracht ist; und mehrere Befestigungselemente (52) zum lösbaren Befestigen des Fahrgestells (48) am inneren Gehäuse (26);
**dadurch gekennzeichnet, dass** ein Kompressor (12) und ein Kondensator (14) an das Fahrgestell (48) angebaut sind, dass eine erste Öffnung (28) zwischen dem Fahrzeugdach (22) und einer unteren Kante des äußeren Gehäuses (24) angeordnet ist und eine zweite Öffnung (30) in dem äußeren Gehäuse (24) angeordnet ist; und dass die Einheit derart konfiguriert ist, dass während der Benutzung Außenluft durch die erste Öffnung (28) in das äußere Gehäuse (24) gelangt, über den Kompressor (12) und den Kondensator (14) strömt und dadurch erwärmt wird und durch die zweite Öffnung (30) aus dem äußeren Gehäuse (24) austritt.

2. Fahrzeug nach Anspruch 1, ferner aufweisend einen Verdampfer (18), der am Fahrgestell (48) angebracht ist.

3. Fahrzeug nach Anspruch 1 oder 2, wobei die mehreren Befestigungselemente (52) Vierteldrehungsarretierbefestigungselemente sind.

4. Fahrzeug nach Anspruch 1, 2 oder 3, wobei das innere Gehäuse (26) eine innere Wand (44) aufweist, die von einer äußeren Wand (46) beabstandet ist, um eine Isolierung für die Kühleinheit bereitzustellen.

5. Fahrzeug nach einem der vorangehenden Ansprüche, ferner aufweisend einen Wasserablass (56), der im inneren Gehäuse (26) vorgesehen ist.

6. Fahrzeug nach den Ansprüchen 5 und 6, wobei der Wasserablass (56) in dem inneren Gehäuse (26) vorgesehen ist.

7. Fahrzeug nach Anspruch 6, wobei der Wasserablass (56) ein Graben ist, der in der inneren Wand (44) des inneren Gehäuses (26) ausgebildet ist.

8. Fahrzeug nach Anspruch 5, 6 oder 7, wobei der Wasserablass (56) aus dem Fahrzeug heraus führt.

9. Fahrzeug nach einem der vorangehenden Ansprüche, ferner aufweisend eine Dichtung (42), die zwischen dem inneren Gehäuse (26) und dem Fahrzeugraum angeordnet ist, um Dichtheit bereitzustellen.

10. Verfahren zum Anbauen einer Kühleinheit an einem Fahrzeug mit einem Fahrzeugraum und einem Fahrzeugdach (22), umfassend:
Anbringen eines äußeren Gehäuses (24) der Einheit (10) am Äußeren des Fahrzeugraums; Bereitstellen einer ersten Öffnung (28), die zwischen dem Fahrzeugdach (22) und einer unteren Kante des äußeren Gehäuses (24) angeordnet ist,
Bereitstellen einer zweiten Öffnung im äußeren Gehäuse (24),
Anbauen eines Kondensators (14), eines Kompressors (12) und eines Verdampfers (18) an einem Fahrgestell (48);
Anbringen des Fahrgestells (48) an einer Innenfläche des Fahrzeugraums; und
Befestigen eines inneren Gehäuses (26) der Einheit (10) am Fahrgestell (48) mithilfe von mehreren Befestigungselementen (52) im Fahrzeugraum;
wobei die Konfiguration derart ist, dass bei der Benutzung Außenluft durch die erste Öffnung (28) in das äußere Gehäuse (24) gelangt, über den Kompressor (12) und den Kondensator (14) strömt und dadurch erwärmt wird und durch die zweite Öffnung (30) aus dem äußeren Gehäuse (24) austritt.

11. Verfahren nach Anspruch 10, wobei der Schritt des Befestigens des inneren Gehäuses (26) das Einführen der einzelnen Befestigungselemente (52) in eine von mehreren Öffnungen (54) im inneren Gehäuse (26) einschließt.

12. Verfahren nach Anspruch 11, wobei der Schritt des Befestigens des inneren Gehäuses (26) das lösbare Arretieren der mehreren Befestigungselemente (52) am Fahrgestell (48) einschließt.

13. Verfahren nach einem der Ansprüche 10 bis 12, ferner folgenden Schritt aufweisend:
Anordnen einer Dichtung (42) zwischen dem Fahrzeugraum und dem inneren Gehäuse (26).

## Revendications

1. Véhicule comportant un compartiment de véhicule et un toit (22) de véhicule et une unité de réfrigération, ladite unité de réfrigération comprenant :
un carter externe (24) situé en premier lieu en dehors dudit compartiment de véhicule ;
un carter interne (26) situé en premier lieu à l'intérieur dudit compartiment de véhicule ;
un châssis (48) monté à une surface intérieure dudit compartiment de véhicule ; et
un ensemble de fixations (52) permettant d'attacher de façon réversible ledit châssis (48) audit carter interne (26) ;
**caractérisé en ce qu'**un compresseur (12) et un condenseur (14) sont assemblés au châssis (48), **en ce qu'**une première ouverture (28) se trouve entre ledit toit de véhicule (22) et un bord inférieur dudit carter externe (24) et **en ce qu'**une deuxième ouverture (30) se trouve dans ledit carter externe (24) ; et **en ce que** l'unité est configurée de sorte qu'en cours d'utilisation, de l'air externe pénètre dans le carter externe (24) à travers la première ouverture (28), passe au-dessus du compresseur (12) et du condenseur (14) pour être ainsi chauffé, puis sort du carter externe (24) à travers la deuxième ouverture (30).

2. Véhicule selon la revendication 1, comprenant en outre un évaporateur (18) monté sur ledit châssis (48).

3. Véhicule selon la revendication 1 ou 2, dans lequel ledit ensemble de fixations (52) sont des fixations de verrouillage à quart de tour.

4. Véhicule selon la revendication 1, 2 ou 3, dans lequel ledit carter interne (26) comprend une paroi interne (44) espacée d'une paroi extérieure (46), permettant une isolation pour ladite unité de réfrigération.

5. Véhicule selon l'une quelconque des revendications précédentes, comprenant un drain à eau (56) prévu dans ledit carter interne (26).

6. Véhicule selon les revendications 5 et 6, dans lequel ledit drain à eau (56) est prévu dans ledit carter interne (26).

7. Véhicule selon la revendication 6, dans lequel ledit drain à eau (56) est un canal formé dans ladite paroi intérieure (44) dudit carter interne (26).

8. Véhicule selon la revendication 5, 6 ou 7, dans lequel ledit drain à eau (56) conduit à l'extérieur du véhicule.

9. Véhicule selon l'une quelconque des revendications précédentes, comprenant en outre une garniture (42) située entre ledit carter interne (26) et ledit compartiment de véhicule, afin d'obtenir un joint d'étanchéité.

10. Procédé d'assemblage d'une unité de réfrigération à un véhicule comportant un compartiment de véhicule et un toit (22) de véhicule, comprenant :
le montage d'un carter externe (24) de ladite unité (10) à l'extérieur dudit compartiment de véhicule ;
la conception d'une première ouverture (28) située entre ledit toit de véhicule (22) et un bord inférieur dudit carter externe (24),
la conception d'une deuxième ouverture dans ledit carter externe (24),
l'assemblage d'un condenseur (14), d'un compresseur (12) et d'un évaporateur (18) à un châssis (48),
le montage du châssis (48) à une surface intérieure du compartiment de véhicule ; et
la fixation d'un carter interne (26) de l'unité (10) au châssis (48) à l'aide d'un ensemble de fixations (52) à l'intérieur du compartiment du véhicule ;
la configuration étant telle qu'en cours d'utilisation, de l'air externe pénètre dans le carter externe (24) à travers la première ouverture (28), passe pardessus le compresseur (12) et le condenseur (14) en chauffant ainsi, et sort du carter externe (24) à travers la deuxième ouverture (30).

11. Procédé selon la revendication 10, dans lequel ladite étape de fixation du carter interne (26) comprend l'insertion de chacune des fixations d'un ensemble de fixations (52) à travers un ensemble d'ouvertures (54) dans le carter interne (26).

12. Procédé selon la revendication 11, dans lequel ladite étape de fixation du carter interne (26) comprend le verrouillage réversible de l'ensemble de fixations (52) au châssis (48).

13. Procédé selon l'une quelconque des revendications 10 à 12, comprenant en outre une étape de placement d'une garniture (42) entre le compartiment du véhicule et le carter interne (26).
